# EUROPEAN PATENT APPLICATION

(11) **EP 4 625 596 A2**
(43) Date of publication of application: **01.10.2025**
(21) Application number: 25165897.7
(22) Date of filing: 25.03.2025
(51) Int. Cl.: H01M 10/0587, H01M 50/55, H01M 50/567, H01M 50/593

(54) **SECONDARY BATTERY**

(30) Priority: 25.03.2024 KR 20240040161
(71) Applicant: SAMSUNG SDI CO., LTD., Yongin-si, Gyeonggi-do 17084 (KR)
(72) Inventor: YU, GWAN HYEON, 17084 Yongin-si, Gyeonggi-do (KR); JUNG, HYUN KI, 17084 Yongin-si, Gyeonggi-do (KR); KIM, MYUNG SEOB, 17084 Yongin-si, Gyeonggi-do (KR); YOO, YOON SUN, 17084 Yongin-si, Gyeonggi-do (KR); JUN, WOO TAE, 17084 Yongin-si, Gyeonggi-do (KR); PARK, GUN GUE, 17084 Yongin-si, Gyeonggi-do, (KR); KO, SUNG GWI, 17084 Yongin-si, Gyeonggi-do (KR); KIM, MUN SUNG, 17084 Yongin-si, Gyeonggi-do (KR); LEE, DONG SUB, 17084 Yongin-si, Gyeonggi-do (KR)
(74) Representative: Gulde & Partner

(57) **Abstract**

A secondary battery includes: an electrode assembly including a first electrode plate, a second electrode plate, and a separator; a case accommodating the electrode assembly; a positive electrode current collector in the case and electrically connected to the first electrode plate; a rivet terminal having one side connected to the positive electrode current collector and another side extending to an outside of the case; an inner insulating part between the positive electrode current collector and the case to block an electrical connection between the positive electrode current collector and the case; and a distance-maintaining member between the inner insulating part and the positive electrode current collector to maintain a distance between the inner insulating part and the positive electrode current collector.

## Description

### BACKGROUND

### 1. Field

Aspects of embodiments of the present disclosure relate to a secondary battery.

### 2. Description of the Related Art

Unlike a primary battery that cannot be recharged, a secondary battery is a battery that can be recharged and discharged. A low-capacity secondary battery may be used for portable small-sized electronic devices, such as smartphones, feature phones, notebook computers, digital cameras, and camcorders, and a high-capacity secondary battery may be used as a power source for driving a motor and a power storage battery in hybrid vehicles or electric vehicles. The secondary battery may include an electrode assembly having a positive electrode and a negative electrode, a case accommodating the electrode assembly, an electrode terminal connected to the electrode assembly, and the like.

The above-described information disclosed in the technology that serves as the background of the present disclosure is only for improving understanding of the background of the present disclosure and thus may include information that does not constitute the related art.

### SUMMARY

Embodiments of the present disclosure provide a secondary battery capable of preventing short circuit between a negative electrode of an electrode assembly and a rivet terminal.

These and other aspects and features of the present disclosure will be described in or will be apparent from the following description of embodiments of the present disclosure.

A secondary battery, according to an embodiment of the present disclosure, includes an electrode assembly including a first electrode plate, a second electrode plate, and a separator, a case accommodating the electrode assembly, a positive electrode current collector in (positioned inside) the case and electrically connected to the first electrode plate, a rivet terminal having one side connected to the positive electrode current collector and another side extending to the outside of the case, an inner insulating part (positioned) between the positive electrode current collector and the case configured to block an electrical connection between the positive electrode current collector and the case, and a distance-maintaining member (positioned) between the inner insulating part and the positive electrode current collector configured to maintain a distance between the inner insulating part and the positive electrode current collector.

In some embodiments, the rivet terminal may have a lower surface coplanar with or lower than a lower surface of the distance-maintaining member. In some embodiments, the positive electrode current collector may have a lower surface coplanar with or lower than a lower surface of the rivet terminal.

In some embodiments, the distance-maintaining member may have a plate shape with a first inner hole to allow the rivet terminal to be located therein.

In some embodiments, the distance-maintaining member may include at least one of polyethylene (PE), polypropylene (PP), or polyethylene terephthalate (PET).

In some embodiments, the distance-maintaining member may be made of an insulative material and may have a plate shape with a first inner hole to allow the rivet terminal to be located therein.

In some embodiments, a vertical length by which the rivet terminal protrudes into the case may be equal to or greater than a sum of the vertical length of the inner insulating part and the vertical length of the distance-maintaining member.

In some embodiments, the inner insulating part and the distance-maintaining member may be integrally formed with each other.

In some embodiments, the distance-maintaining member may be provided in plural (in a plurality), and the (plurality of) distance-maintaining members may protrude from the inner insulating part toward the positive electrode current collector and may be mounted radially about the rivet terminal.

In some embodiments, the distance-maintaining member and the positive electrode current collector may be integrally formed with each other.

In some embodiments, the distance-maintaining member may protrude from the positive electrode current collector toward the inner insulating part.

In some embodiments, the distance-maintaining member may be provided in plural (in a plurality), and the (plurality of) distance-maintaining members may have a protrusion shape.

In some embodiments, the positive electrode current collector may include a current collecting body mounted in contact with and electrically connected to the electrode assembly, an inner body in a spacing hole in the center of the current collecting body and fixed to the rivet terminal, and a bridge interconnecting the current collecting body and the inner body.

In some embodiments, the inner insulating part may be integrally formed with the distance-maintaining member.

In some embodiments, the distance-maintaining member may include a hemispherical or rectangular parallelepiped protrusion protruding from the current collecting body toward the inner insulating part.

In some embodiments, the distance-maintaining member may be provided in plural (in a plurality), and the (plurality of) distance-maintaining members may be mounted radially about the inner body.

In some embodiments, the plurality of distance-maintaining members may be symmetrically arranged.

A secondary battery, according to another embodiment of the present disclosure, includes an electrode assembly including a first electrode plate and a second electrode plate, a case accommodating the electrode assembly, a positive electrode current collector in the case and electrically connected to the first electrode plate, a rivet terminal having one side connected to the positive electrode current collector and another side extending to the outside of the case, and a distance-maintaining member between the case and the positive electrode current collector to maintain a distance between the case and the positive electrode current collector.

In some embodiments, the distance-maintaining member may be made of an insulative material and may have a plate shape with a first inner hole to allow the rivet terminal to be located therein.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a perspective view of a secondary battery according to an embodiment of the present disclosure;
FIG. 2 is a cross-sectional view of the secondary battery shown in FIG. 1;
FIG. 3 is a close up cross-sectional view of a portion of FIG. 2;
FIG. 4 is a perspective view of a distance-maintaining member shown in FIGS. 2 and 3;
FIG. 5 is a close up cross-sectional view of a part of a secondary battery according to another embodiment of the present disclosure;
FIG. 6 is a close up cross-sectional view of a part of a secondary battery according to another embodiment of the present disclosure;
FIG. 7 is a perspective view of an inner insulating part and a distance-maintaining member shown in FIG. 6;
FIG. 8 is a close up cross-sectional view of a part of a secondary battery according to another embodiment of the present disclosure;
FIG. 9 is a perspective view of a positive electrode current collector and a distance-maintaining member shown in FIG. 8;
FIG. 10 is a perspective view of a distance-maintaining member according to another embodiment of the present disclosure;
FIGS. 11A and 11B are perspective views of a battery pack including a secondary battery according to an embodiment of the present disclosure; and
FIGS. 12A and 12B are, respectively, a perspective view and a side view of a vehicle including the battery pack shown in FIGS. 11A and 11B according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

In addition, the terms "comprise" or "include" and/or "comprising" or "including," when used in this specification, specify the presence of stated shapes, numbers, steps, operations, members, elements, and/or groups thereof, but do not preclude the presence or addition of one or more other shapes, numbers, steps, operations, members, elements, and/or groups thereof.

Additionally, for the purpose of facilitating an understanding of the invention, the attached drawings are not depicted to actual scale; dimensions of some components may be exaggerated for clarity. Also, identical components in different embodiments may be denoted with the same reference numerals.

When two objects of comparison are referred to as being the same, it means the two objects are "substantially the same." Thus, substantially the same may include a deviation that is considered low in the art, for example, a deviation of less than 5%. In addition, when a parameter is said to be uniform in a certain region, it may mean that the parameter is uniform from an average perspective.

Although "first," "second," and the like are used to describe various components, these components are of course not limited by these terms. These terms are only used to distinguish one component from other components, and unless otherwise stated, a first component could be termed a second component.

Throughout the specification, unless specifically stated otherwise, each component may be singular or plural.

When an arbitrary element is referred to as being "disposed above (or below)" or "disposed on (or under)" a component, it may mean not only that the arbitrary element is disposed in contact with an upper surface (or lower surface) of the component, but also that other elements may be interposed between the component and the arbitrary element disposed on (or under) the component.

When a component is described as being "connected," "coupled," or "joined" to another component within this patent document, it is understood that the components may be directly connected or joined to each other. However, it should also be interpreted that an intervening component may be interposed between them, or that each component may be "connected," "coupled," or "joined" through another intermediary component. Furthermore, when one part is described as being electrically connected (electrically coupled) to another, this encompasses not only a direct connection but also includes scenarios where other elements are positioned in between, facilitating an indirect connection.

Throughout this specification, the term 'A and/or B' should be interpreted as meaning either A, B, or both A and B, unless an alternative interpretation is explicitly stated. Thus, 'and/or' encompasses any and all possible combinations of the items listed. Similarly, when 'C to D' is mentioned, it is understood to mean C or more, up to and including D, unless noted otherwise. The terminology employed herein is intended solely for describing specific embodiments and should not be regarded as limiting the scope of this disclosure.

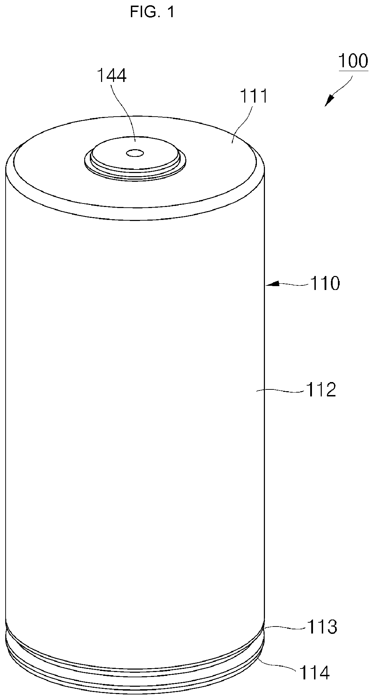

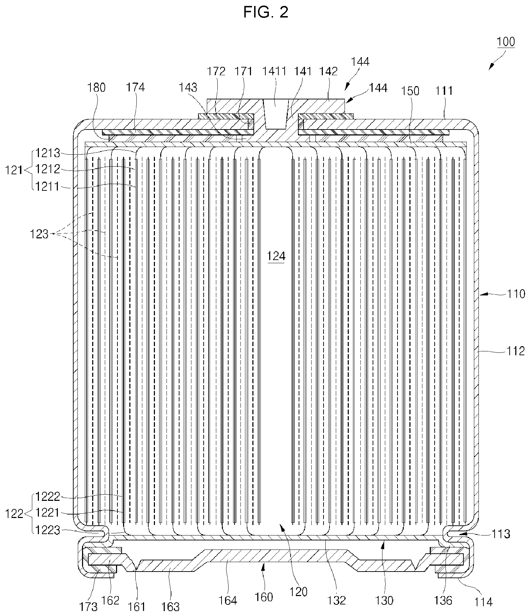

FIG. 1 is a perspective view of a secondary battery 100 according to an embodiment of the present disclosure, and FIG. 2 is a cross-sectional view of the secondary battery 100 shown in FIG. 1. As shown in FIGS. 1 and 2, the secondary battery 100, according to an embodiment of the present disclosure, includes a case 110, an electrode assembly 120, a negative electrode current collector 130, a positive electrode current collector 150, a rivet terminal 144, a distance-maintaining member 180, and may further include a vent plate 160. In some embodiments, the secondary battery 100 may further include at least one of an insulating gasket 171, an upper insulating member 172, or a cap gasket 173. The secondary battery 100 may further includes an inner insulating part 174. According to embodiments of the present disclosure, the secondary battery 100 may be a cylindrical secondary battery 100, but the present disclosure is not limited thereto.

The case 110 may be variously modified (e.g., may have various shapes) so long as the electrode assembly 120 is accommodated therein. The electrode assembly 120 may include a first electrode plate 121 and a second electrode plate 122. The case 110 may accommodate the electrode assembly 120 and an electrolyte therein and may define the external appearance of the secondary battery 100 together with the vent plate 160. The case 110 may include or may be referred to as a can, a housing, or an exterior body. The case 110 may include a substantially disc-shaped case upper wall 111 and a cylindrical case sidewall 112 extending downwardly from the case upper wall 111. In some embodiments, the case 110 may have various suitable shapes other than the cylindrical shape, for example, a pouch shape. The case 110 may include metal, such as steel, nickel-plated steel, a steel alloy, aluminum, an aluminum alloy, or deep-drawing cold-rolled steel (SPCE), or a laminated film or plastic composing a pouch. The case sidewall 112 may have a beading portion (e.g., a bead) 113 depressed inwardly toward the interior of the case 110. The case sidewall 112 may be provided at a lower end thereof with a crimping portion (e.g., a crimped end) 114 bent toward the interior of the case 110. If the case 110 includes both the beading portion 113 and the crimping portion 114, the crimping portion 114 may be located below the beading portion 113. The beading portion 113 may suppress movement of the electrode assembly 120 in the case 110 together with the case upper wall 111. The crimping portion 114 may press the peripheral portion of the vent plate 160 via the cap gasket 173, thereby firmly fixing the vent plate 160 to the case 110.

The electrode assembly 120 is accommodated in the case 110 together with an electrolyte. The electrode assembly 120 may include or may be referred to as an electrode group, an electrode body, or a jellyroll. The electrode assembly 120 includes a first electrode plate 121, a second electrode plate 122, and a separator 123 disposed between the first electrode plate 121 and the second electrode plate 122, and may be wound in a cylindrical shape. In some embodiments, the electrode assembly 120 may have a hollow core 124 at the center thereof extending in a vertical longitudinal direction (e.g., the vertical direction in FIG. 2). In some embodiments, a center pin may be provided in (e.g., may be coupled to) the hollow core 124.

The first electrode plate 121 may include a first substrate 1211 and a first active material layer 1212 on the first substrate 1211. The first substrate 1211 may have a first uncoated portion (or a first tab) 1213 on which the first active material layer 1212 is not present. The first uncoated portion (or the first tab) 1213 of the first substrate 1211 may extend outwardly (e.g., upwardly), and the first tab 1213 may be electrically connected to the positive electrode current collector 150. According to embodiments of the present disclosure, the first tab 1213 may be referred to as a first uncoated portion or a positive electrode substrate tab.

The second electrode plate 122 may include a second substrate 1221 and a second active material layer 1222 on the second substrate 1221. The second substrate 1221 may have a second uncoated portion (or a second tab) 1223 on which the second active material layer 1222 is not present. The second uncoated portion (or the second tab) 1223 of the second substrate 1221 may extend outwardly (e.g., downwardly), and the second tab 1223 may be electrically connected to the negative electrode current collector 130. In some embodiments, the first tab 1213 and the second tab 1223 may extend in opposite directions. According to embodiments of the present disclosure, the second tab 1223 may be referred to as a second uncoated portion or a negative electrode substrate tab.

The first electrode plate 121 may act as a positive electrode. In such an embodiment, the first substrate 1211 may be formed of, for example, an aluminum foil, and the first active material layer 1212 may include, for example, a transition metal oxide. The second electrode plate 122 may act as a negative electrode. In such an embodiment, the second substrate 1221 may be formed of, for example, a copper foil or a nickel foil, and the second active material layer 1222 may include, for example, graphite and/or silicon.

The separator 123 may prevent a short circuit between the first electrode plate 121 and the second electrode plate 122 while allowing lithium ions to move therebetween. In some embodiments, the separator 123 may be located on each of two opposite side surfaces of the first electrode plate 121 or may be located on each of two opposite side surfaces of the second electrode plate 122.

The negative electrode current collector 130 may be variously modified so long as the negative electrode current collector 130 is welded to the case 110 and is electrically connected to the electrode assembly 120. The negative electrode current collector 130 may be connected to the second tab 1223 of the electrode assembly 120. The negative electrode current collector 130 may include or may be referred to as a second current collecting body, a second conductive body, or a second conductive plate. In some embodiments, the negative electrode current collector 130 may be formed in a substantially disc shape. A plurality of second tabs 1223 extending/protruding from the electrode assembly 120 may be electrically connected to the upper surface of the negative electrode current collector 130. The second tab 1223 may be bent in an inward direction toward (e.g., approaching) the core 124 or in an outward direction away from (e.g., moving away from) the core 124 and may extend straight in the vertical direction. The second tab 1223 may be laser-welded to the upper surface of the negative electrode current collector 130. The negative electrode current collector 130 may include copper, a copper alloy, nickel, a nickel alloy, aluminum, or an aluminum alloy. In some embodiments, the negative electrode current collector 130 may be fitted between the beading portion 113 and the cap gasket 173 to be electrically connected to the case 110. The negative electrode current collector 130, according to the illustrated embodiment, may include a body portion 132 mounted in contact with the second electrode plate 122 and a wing portion 136 extending outwardly from the body portion 132 and fixed to the case 110 through welding.

The positive electrode current collector 150 may be variously modified so long as the positive electrode current collector 150 is located in (inside) the case 110 and is electrically connected to the first electrode plate 121. The positive electrode current collector 150 may be connected to the first tab 1213 of the electrode assembly 120. The positive electrode current collector 150 may include or may be referred to as a first current collecting body, a first conductive body, or a first conductive plate. In some embodiments, the positive electrode current collector 150 may be formed in a substantially disc shape. A plurality of first tabs 1213 extending/protruding from the electrode assembly 120 may be electrically connected to the lower surface of the positive electrode current collector 150. In some embodiments, the first tab 1213 may be bent in an inward direction toward (e.g., approaching) the core 124 or in an outward direction away from (e.g., moving away from) the core 124 to be laser-welded to the lower surface of the positive electrode current collector 150. The positive electrode current collector 150 may include aluminum, an aluminum alloy, copper, a copper alloy, nickel, or a nickel alloy.

The positive electrode current collector 150 may be located between the electrode assembly 120 and the rivet terminal 144 and may be electrically connected to the electrode assembly 120 and the rivet terminal 144.

The positive electrode current collector 150 may have a shape corresponding to the shape of the upper portion of the electrode assembly 120 and may be formed as, for example, a circular metal plate. The planar size of the positive electrode current collector 150 may be equal to or smaller than the size of the upper surface of the electrode assembly 120. The positive electrode current collector 150 may be made of aluminum (Al). The lower surface of the positive electrode current collector 150 may be fixed through welding in a state of being in contact with the upper portion of the electrode assembly 120. The positive electrode current collector 150 may be fixed and electrically connected to the positive electrode plate exposed (or protruding or extending) upwardly from the electrode assembly 120. Because the upper surface of the positive electrode current collector 150 is fixed through welding in a state of being in contact with the lower surface of the rivet terminal 144, the positive electrode current collector 150 may be fixed and electrically connected to the rivet terminal 144. Because the positive electrode current collector 150 is located between and electrically connected to the positive electrode plate of the electrode assembly 120 and the rivet terminal 144, the positive electrode current collector 150 may act as a current flow passage.

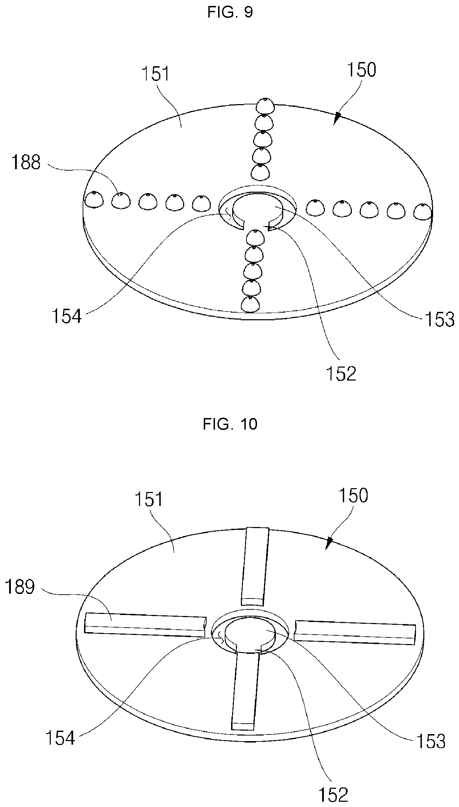

The positive electrode current collector 150, according to an embodiment of the present disclosure, may include a current collecting body 151 in contact with and electrically connected to the electrode assembly 120, an inner body 153 located in a spacing hole (e.g., a center hole or opening) 154 formed in the center of the current collecting body 151 and fixed to the rivet terminal 144, and a bridge 152 interconnecting the current collecting body 151 and the inner body 153 (see, e.g., FIG. 9).

The current collecting body 151 may have a disc shape and may be located in the case 110. The current collecting body 151 and the first electrode plate 121 may be fixed to each other through welding. The spacing hole 154 may be formed as a hole penetrating (or extending through) the current collecting body 151, and the inner body 153 may be located at the center of the spacing hole 154. The inner body 153 may be welded and electrically connected to the central body of the rivet terminal 144. The inner body 153 may be formed in a disc shape. The inner body 153 and the current collecting body 151 may be connected to each other via the bridge 152.

The rivet terminal 144 may be variously modified so long as one side thereof is connected to the positive electrode current collector 150, and the other side thereof extends to the outside of the case 110. The upper surface of the positive electrode current collector 150 may be coplanar with or lower than the lower surface of the rivet terminal 144.

The rivet terminal 144 may be coupled to the case 110 to be electrically connected to the electrode assembly 120. The rivet terminal 144 has one side electrically connected to the positive electrode current collector 150 and another side extending to an outside of the case 110. According to embodiments of the present disclosure, the rivet terminal 144 may include or may be referred to as a rivet or a terminal.

The rivet terminal 144 may include a rivet column 141, a rivet head 142, and a rivet leg 143. The rivet column 141 may be coupled to the case upper wall 111 in a state of penetrating (or extending through) the case upper wall 111. The rivet head 142 may be connected to the upper end of the rivet column 141 and may be located above the case upper wall 111. The rivet leg 143 may be connected to the lower end of the rivet column 141 and may be located below the case upper wall 111. In some embodiments, the insulating gasket 171 may be interposed between the rivet column 141 and the case upper wall 111. In some embodiments, the upper insulating member 172 may be interposed between the rivet head 142 and the upper side of the case upper wall 111. In some embodiments, the inner insulating part 174 may be mounted between the rivet leg 143 and the lower side of the case upper wall 111. The inner insulating part 174 may be variously modified so long as the inner insulating part 174 is mounted between the rivet terminal 144 and the case 110 and blocks an electrical connection between the rivet terminal 144 and the case 110.

In some embodiments, the insulating gasket 171, the upper insulating member 172, and the inner insulating part 174 may be separately provided. In some embodiments, the insulating gasket 171, the upper insulating member 172, and the inner insulating part 174 may not be integrated with each other. In some embodiments, the insulating gasket 171 and the upper insulating member 172 may be integrated with each other, and the inner insulating part 174 may be provided separately. In some embodiments, the insulating gasket 171, the upper insulating member 172, and the inner insulating part 174 may be integrated with each other. In some embodiments, the insulating gasket 171 and the inner insulating part 174 may be integrated with each other, and the upper insulating member 172 may be provided separately. In some embodiments, the rivet column 141 may have a rivet recess 1411 formed therein. In some embodiments, the rivet leg 143 may be electrically connected to the positive electrode current collector 150. In some embodiments, a laser beam may be radiated through the rivet recess 1411 to weld the rivet leg 143 to the positive electrode current collector 150. In some embodiments, after the welding process, the rivet recess 1411 may be filled with a metal or may be blocked by a metal plate. The rivet terminal 144 may include aluminum, an aluminum alloy, copper, a copper alloy, nickel, or a nickel alloy. The rivet terminal 144 may act as an external terminal to be electrically connected to an external device. In some embodiments, the case upper wall 111 may also act as an external terminal to be electrically connected to an external device. Because a gap between the case 110 and the rivet terminal 144 is blocked (e.g., filled) by the insulating gasket 171 and the upper insulating member 172, leakage of the electrolyte may be prevented.

If the cylindrical case 110 has a large diameter, the cylindrical secondary battery 100 may be referred to as a large-diameter secondary battery 100. In a large-diameter secondary battery 100, a distance between the second active material layer 1222 of the second electrode plate 122 and the rivet terminal 144 should be maintained at a value or greater to ensure safety. The electrode assembly 120 may be pressed during a process of welding the negative electrode current collector 130 to the electrode assembly 120, in which case, the distance between the second electrode plate 122 and the rivet terminal 144 may be reduced after welding the negative electrode current collector 130 and the electrode assembly 120.

For example, if a vertical length by which the rivet terminal 144 protrudes into the case 110 is 1.3 mm, the vertical length of the inner insulating part 174 may be 0.8 mm, and the distance between the positive electrode current collector 150 and the inner insulating part 174 may be 0.5 mm. In the above description, the protruding length of the rivet terminal 144, the vertical length of the inner insulating part 174, and the distance between the positive electrode current collector 150 and the inner insulating part 174 are merely provided as example and may be variously modified. According to embodiments of the present disclosure, the vertical length may be referred to as a thickness.

The distance-maintaining member 180 may be mounted in an empty space on (e.g., above) the positive electrode current collector 150, thereby preventing the positive electrode current collector 150 from bending upwardly toward the case upper wall 111. By preventing bending of the positive electrode current collector 150 in the upward direction, the electrode assembly 120 welded to the positive electrode current collector 150 may be prevented from moving upwardly together with the positive electrode current collector 150, and a safety distance between the second electrode plate 122 and the rivet terminal 144 may be ensured. For example, if the vertical length by which the rivet terminal 144 protrudes into the case 110 is 1.3 mm and the vertical length of the inner insulating part 174 is 0.8 mm, the vertical length of the distance-maintaining member 180 may be in a range of about 0.3 to about 0.5 mm. If the vertical length of the distance-maintaining member 180 is about 0.3 mm, the distance between the distance-maintaining member 180 and the positive electrode current collector 150 may be maintained at about 0.2 mm or less; however, the present disclosure is not limited thereto. The vertical length of the distance-maintaining member 180 and the distance between the distance-maintaining member 180 and the positive electrode current collector 150 are merely provided as examples and may be variously modified.

The distance-maintaining member 180 may be variously implemented, for example, as a separate spacer, increasing the thickness of the inner insulating part 174, or adding a separate protrusion to the positive electrode current collector 150.

The vent plate 160 may be variously modified so long as the vent plate 160 shields (e.g., seals) an open inlet of the case 110. The vent plate 160 may be coupled between the beading portion 113 of the case 110 and the crimping portion 114 of the case 110 with the cap gasket 173 interposed therebetween. The vent plate 160 may include or may be referred to as a cap plate, a cap assembly, a safety vent, a conductive plate, or a sealing plate. In some embodiments, the vent plate 160 may be directly welded to the case sidewall 112 or may be coupled to the case sidewall 112 in a curling or seaming manner without forming the beading portion 113 and the crimping portion 114.

In some embodiments, the vent plate 160 may have a vent notch 161 formed in an upper surface or lower surface thereof so that a portion of the vent plate 160 corresponding to the vent notch 161 has a reduced thickness. In some embodiments, the vent plate 160 may have a peripheral area 162 fitted between the beading portion 113 and the crimping portion 114, an inner area 163 connected to the peripheral area 162 and formed to be lower than the peripheral area 162, and a central area 164 connected to the inner area 163 and formed to be higher than the inner area 163. The vent notch 161 may be formed in the inner area 163. In some embodiments, the central area 164 may be closer to the electrode assembly 120 than the peripheral area 162 and the inner area 163. If the pressure in the secondary battery 100 is higher than a reference pressure, the vent notch 161 may rupture to discharge internal gas. The vent plate 160 may include steel, nickel-plated steel, stainless steel, aluminum, or an aluminum alloy. In some embodiments, the case 110 and the vent plate 160 coupled thereto may be collectively referred to as a case 110.

The cap gasket 173 may be variously modified so long as the cap gasket 173 is mounted and has a shape surrounding the outer periphery of the vent plate 160 and blocks an electrical connection between the negative electrode current collector 130, the case 110, and the vent plate 160. The cap gasket 173, according to an embodiment of the present disclosure, may be mounted between the vent plate 160 and the wing portion 136 of the negative electrode current collector 130.

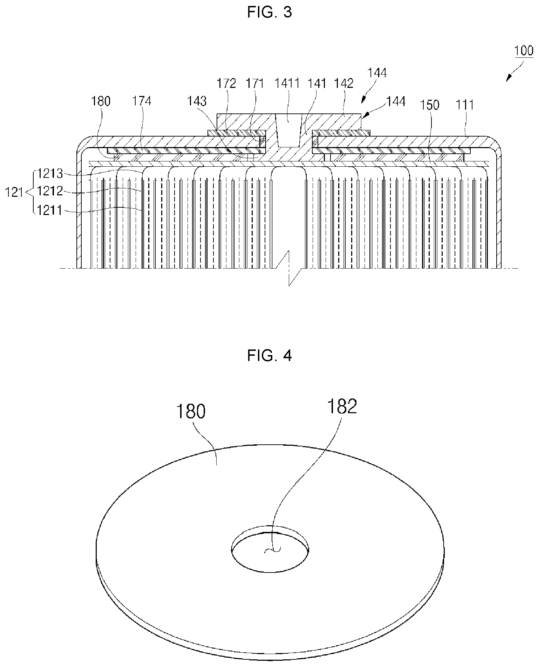

FIG. 3 is a close up cross-sectional view of FIG. 2 showing the distance-maintaining member 180, according to an embodiment of the present disclosure, mounted between the inner insulating part 174 and the positive electrode current collector 150, and FIG. 4 is a perspective view of the distance-maintaining member 180 shown in FIG. 3. As shown in FIGS. 3 and 4, the inner insulating part 174 may be variously modified so long as the inner insulating part 174 is mounted between the positive electrode current collector 150 and the case 110 and blocks electrical connection between the positive electrode current collector 150 and the case 110. The inner insulating part 174 may be interposed between the case 110 and the rivet terminal 144. The inner insulating part 174 may be in contact with or may be adhered to the case upper wall 111. In some embodiments, a portion of the inner insulating part 174 may be in contact with or adhered to the rivet column 141.

The distance-maintaining member 180 may be variously modified so long as the distance-maintaining member 180 is located between the inner insulating part 174 and the positive electrode current collector 150 and maintains the distance between the inner insulating part 174 and the positive electrode current collector 150. The distance-maintaining member 180, according to an embodiment of the present disclosure, may be made of an insulative material and may be formed in a plate shape having a first inner hole 182 formed therein to allow the rivet terminal 144 to be located therein (e.g., to pass therethrough). In some embodiments, the distance-maintaining member 180 may include at least one of polyethylene (PE), polypropylene (PP), or polyethylene terephthalate (PET). The distance-maintaining member 180 may be located below the inner insulating part 174 and above the positive electrode current collector 150. The distance-maintaining member 180 may be provided separately from the inner insulating part 174 and may be variously modified in shape and thickness. The distance-maintaining member 180, according to the illustrated embodiment, may have a disc shape with the first inner hole 182 located at the center of the distance-maintaining member 180. The vertical length by which the rivet terminal 144 protrudes into the case 110 may be greater than or equal to a sum of the vertical length of the inner insulating part 174 and the vertical length of the distance-maintaining member 180. If the distance-maintaining member 180 is additionally mounted between the positive electrode current collector 150 and the inner insulating part 174, a reduction in distance between the second electrode plate 122 and the rivet terminal 144 may be prevented or minimized. The vertical length of the distance-maintaining member 180 may be set by (or determined by) the distance between the positive electrode current collector 150 and the inner insulating part 174 or the distance between the positive electrode current collector 150 and the case upper wall 111.

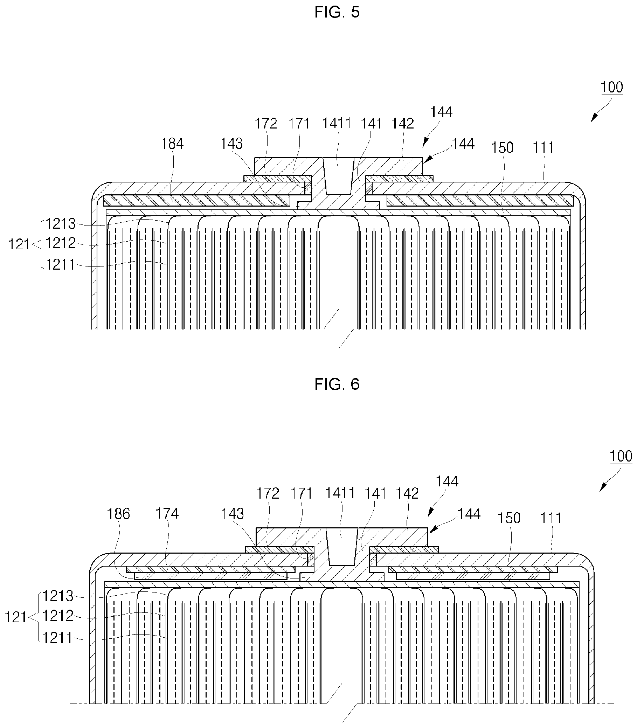

FIG. 5 is a cross-sectional view of a secondary battery including a distance-maintaining member 184 according to another embodiment of the present disclosure. As shown in FIG. 5, the distance-maintaining member 184 according to the illustrated embodiment may be integrally formed with the inner insulating part 174. For example, only the distance-maintaining member 184 may be mounted between the positive electrode current collector 150 and the case upper wall 111. The distance-maintaining member 184 may act as the inner insulating part 174 as described in connection with the above embodiment. The distance-maintaining member 184 may be made of an insulative material and may include at least one of polyethylene (PE), polypropylene (PP), or polyethylene terephthalate (PET).

The horizontal length of the distance-maintaining member 184 may be greater than the horizontal length of the positive electrode current collector 150, thereby preventing contact between the positive electrode current collector 150 and the case 110 and improving electrical safety.

The vertical length by which the rivet terminal 144 protrudes into the case 110 through the case upper wall 111 may be equal to or greater than the vertical length of the distance-maintaining member 184. If the vertical length by which the rivet terminal 144 protrudes into the case 110 is greater than the vertical length of the distance-maintaining member 184, the distance-maintaining member 184 and the positive electrode current collector 150 may be spaced apart from each other by a set interval. The spacing distance between the distance-maintaining member 184 and the positive electrode current collector 150 may be set to be about 0.2 mm. However, the spacing distance between the distance-maintaining member 184 and the positive electrode current collector 150 may be variously modified so long as the distance-maintaining member 184 prevents the positive electrode current collector 150 from being deformed upwardly. If there is no interval between the distance-maintaining member 184 and the positive electrode current collector 150, an interval between the positive electrode current collector 150 and the electrode assembly 120 may be reduced below a safety distance during an assembly process, thereby deteriorating electrical safety.

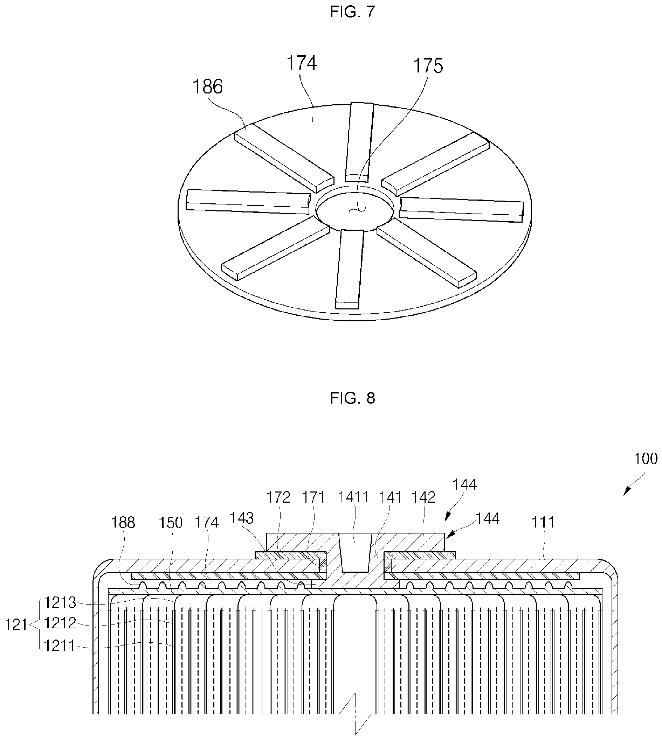

FIG. 6 is a cross-sectional view of a secondary battery including a distance-maintaining member 186 according to another embodiment of the present disclosure, and FIG. 7 is a perspective view of the inner insulating part 174 and the distance-maintaining member 186 shown in FIG. 6. As shown in FIGS. 6 and 7, the distance-maintaining member 186 according to the illustrated embodiment may be provided in plural, and the plurality of distance-maintaining members 186 may protrude from the inner insulating part 174 toward the positive electrode current collector 150 and may be mounted (or arranged) radially about the rivet terminal 144. The inner insulating part 174 may be formed in a disc shape having a central hole 175 formed therein, and the distance-maintaining members 186 mounted radially about the central hole 175 may be integrally formed with the inner insulating part 174 or may be adhered or secured to the inner insulating part 174. The distance-maintaining members 186 may be made of an insulative material and may include at least one of polyethylene (PE), polypropylene (PP), or polyethylene terephthalate (PET).

The vertical length by which the rivet terminal 144 protrudes into the case 110 through the case upper wall 111 may be equal to or greater than a sum of the vertical length of the inner insulating part 174 and the vertical length of the distance-maintaining member 186. As shown in FIG. 6, the vertical length by which the rivet terminal 144 protrudes into the case 110 through the case upper wall 111 may be greater than the sum of the vertical length of the inner insulating part 174 and the vertical length of the distance-maintaining member 186, and the distance-maintaining member 186 and the positive electrode current collector 150 may be spaced apart from each other by a set interval.

FIG. 8 is a cross-sectional view of a secondary battery including a distance-maintaining member 188 according to another embodiment of the present disclosure, and FIG. 9 is a perspective view of the positive electrode current collector 150 and the distance-maintaining member 188 shown in FIG. 8. As shown in FIGS. 8 and 9, the distance-maintaining member 188 according to the illustrated embodiment may be variously modified so long as the distance-maintaining member 188 protrudes from the positive electrode current collector 150 toward the inner insulating part 174.

The positive electrode current collector 150 may include a current collecting body 151 mounted to be in contact with and electrically connected to the electrode assembly 120, an inner body 153 located in a spacing hole 154 formed in the center of the current collecting body 151 and fixed to the rivet terminal 144, and a bridge 152 interconnecting the current collecting body 151 and the inner body 153. The distance-maintaining member 188 may be implemented as a plurality of protrusions. The distance-maintaining member 188 may be integrally formed with the current collecting body 151 of the positive electrode current collector 150. In some embodiments, the distance-maintaining member 188 may include hemispherical or rectangular parallelepiped protrusions protruding from the current collecting body 151 toward the inner insulating part 174.

The vertical length by which the rivet terminal 144 protrudes into the case 110 through the case upper wall 111 may be equal to or greater than a sum of the vertical length of the inner insulating part 174 and the vertical length of the distance-maintaining member 188. As shown in FIG. 8, the vertical length by which the rivet terminal 144 protrudes into the case 110 may be greater than the sum of the vertical length of the inner insulating part 174 and the vertical length of the distance-maintaining member 188, and the distance-maintaining member 188 and the inner insulating part 174 may be spaced apart from each other by a set interval.

The protrusions included in the distance-maintaining member 188 according to the illustrated embodiment may be mounted radially about the inner body 153. The protrusions included in the distance-maintaining member 188 may be made of the same material as the positive electrode current collector 150. The protrusions included in the distance-maintaining member 188 may protrude upwardly from the positive electrode current collector 150 to face (e.g., to contact) the inner insulating part 174. The protrusions included in the distance-maintaining member 188 and the inner insulating part 174 may be mounted to be in contact with or spaced apart from each other by a set interval. As shown in FIG. 9, the protrusions included in the distance-maintaining member 188 may have a hemispherical shape and may be mounted (or arranged) in a cross or radial shape about the inner body 153.

FIG. 10 is a perspective view of a distance-maintaining member 189 according to another embodiment. As shown in FIG. 10, the distance-maintaining member 189 according to the illustrated embodiment may be made of the same material as the positive electrode current collector 150 and may be formed in a rectangular parallelepiped band shape. The distance-maintaining member 189 shown in FIG. 10 may include a plurality of rectangular parallelepiped band-shaped protrusions, and the plurality of band-shaped protrusions may be mounted (or arranged) in a cross or radial shape about the inner body 153.

The electrode assembly 120 according to an embodiment of the present disclosure will be described below in more detail.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}CO_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90:5a:51.8, 0≤b≤0.5, 0≤c≤0.5, 0<α<2); LiₐNi_{b}Co_{c}L1_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

The battery according to the above-described embodiment may be used to manufacture a battery pack.

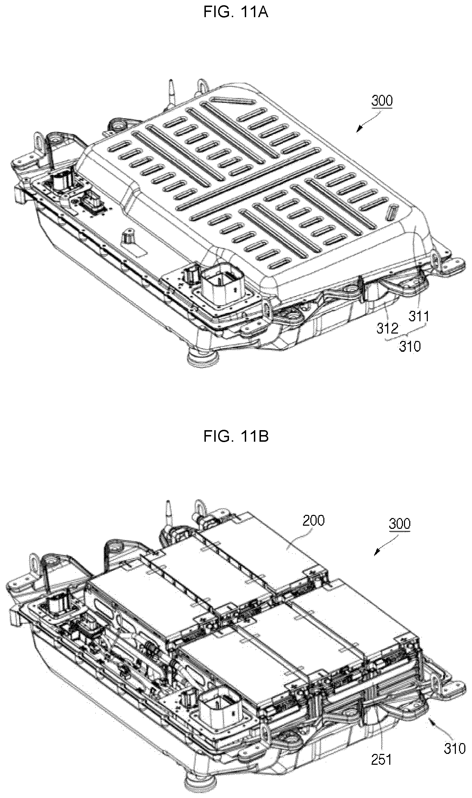

FIGS. 11A and 11B are perspective views of a battery pack including the secondary battery according to an embodiment the present disclosure.

Referring to FIGS. 11A and 11B, the battery pack 300 may include a plurality of battery modules 200 and a housing 310 to accommodate the plurality of battery modules 200. For example, the housing 310 may comprise a first and a second housing 311, 312 that are coupled in facing directions with the plurality of battery modules 200 interposed between them. The plurality of battery modules 210 can be electrically connected to each other using a bus bar 251, and the plurality of battery modules 200 can be electrically connected in series/parallel or a mixed series-parallel manner to obtain the required electrical output. In the drawings, for the sake of convenience, components such as bus bars, cooling units, and external terminals for the electrical connection of battery cells are omitted. In some embodiments, the battery pack 300 can be mounted on a vehicle. The vehicle may be, for example, an electric vehicle, a hybrid vehicle, or a plug-in hybrid vehicle. The vehicle can include both four-wheel and two-wheel vehicles.

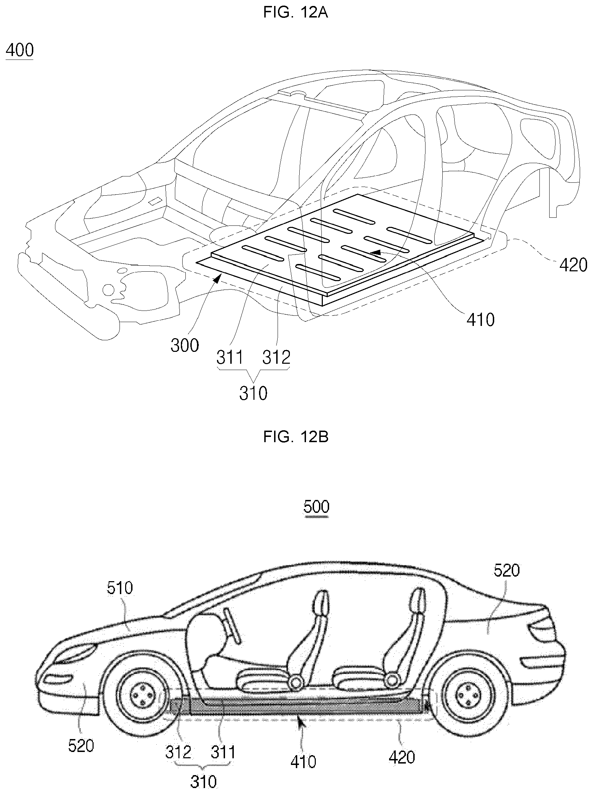

FIGS. 12A and 12B are, respectively, a perspective view and a side view of vehicles 400 and 500 including the battery pack 300 shown in FIGS. 11A and 11B.

In FIG. 12A, the battery pack 300 may include a battery pack cover 311, which is part of the vehicle underbody 410 and may correspond to the first housing, and a pack frame 312, which is placed beneath the vehicle underbody 410 and may correspond to the second housing. The battery pack cover 311 and pack frame 312 may be structurally integrated with the vehicle floor 420. The vehicle underbody 410 separates the interior and exterior of the vehicle, and the pack frame 312 may be positioned outside the vehicle.

As shown in FIG. 12B, the vehicle 500 can be assembled with additional components such as a hood 510 at the front of the vehicle body 400 and fenders 520 located at the front and rear of the vehicle. The vehicle 500 includes the battery pack 300 comprising the battery pack cover 311 and the pack frame 312, and the battery pack 300 can be coupled to the vehicle body part 400.

As is apparent from the above description, according to embodiments of the present disclosure, because a distance-maintaining member is mounted between a positive electrode current collector and an inner insulating part, a short circuit between a negative electrode of an electrode assembly and a rivet terminal may be prevented.

However, the effects achievable through the present invention are not limited to those described above, and other technical effects not mentioned can be clearly understood by those skilled in the art from the description of the invention provided above.

## Claims

1. A secondary battery (100) comprising:
an electrode assembly (120) comprising a first electrode plate (121), a second electrode plate (122), and a separator (123);
a case (110) accommodating the electrode assembly (120);
a positive electrode current collector (150) in the case (110) and electrically connected to the first electrode plate (121);
a rivet terminal (144) having one side connected to the positive electrode current collector (150) and another side extending to an outside of the case (110);
an inner insulating part (174) between the positive electrode current collector (150) and the case (110) configured to block an electrical connection between the positive electrode current collector (150) and the case (110); and
a distance-maintaining member (180, 184, 186, 188, 189) between the inner insulating part (174) and the positive electrode current collector (150) configured to maintain a distance between the inner insulating part (174) and the positive electrode current collector (150).

2. The secondary battery (100) as claimed in claim 1, wherein the rivet terminal (144) has a lower surface coplanar with or lower than a lower surface of the distance-maintaining member (180, 184, 186, 188, 189).

3. The secondary battery (100) as claimed in one of claims 1 or 2, wherein the distance-maintaining member (180, 184, 186, 188, 189) comprises at least one of polyethylene, polypropylene, or polyethylene terephthalate.

4. The secondary battery (100) as claimed in one of the preceding claims, wherein the distance-maintaining member (180, 184) has a plate shape with a first inner hole (182) configured to allow the rivet terminal (144) to be located therein.

5. The secondary battery (100) as claimed in one of claims 1 or 2, wherein the distance-maintaining member (180, 184) is made of an insulative material and has a plate shape with a first inner hole (182) configured to allow the rivet terminal (144) to be located therein.

6. The secondary battery (100) as claimed in one of the preceding claims, wherein a vertical length by which the rivet terminal (144) protrudes into the case (110) is equal to or greater than a sum of a vertical length of the inner insulating part (174) and a vertical length of the distance-maintaining member (180, 184, 186, 188, 189).

7. The secondary battery (100) as claimed in one of the preceding claims, wherein the inner insulating part (174) and the distance-maintaining member (184) are integrally formed with each other.

8. The secondary battery (100) as claimed in one of claims 1 to 3, wherein the distance-maintaining member (186) is provided in a plurality, and
wherein the plurality of distance-maintaining members (186) protrude from the inner insulating part (174) toward the positive electrode current collector (150) and are mounted radially about the rivet terminal (144).

9. The secondary battery (100) as claimed in claim 1, wherein the distance-maintaining member (188, 189) and the positive electrode current collector (150) are integrally formed with each other.

10. The secondary battery (100) as claimed in claim 1 or 9, wherein the distance-maintaining member (188, 189) protrudes from the positive electrode current collector (150) toward the inner insulating part (174).

11. The secondary battery (100) as claimed in claim 9 or 10, wherein the distance-maintaining member (188, 189) is provided in a plurality, and
wherein the plurality of distance-maintaining members (188, 189) have a protrusion shape.

12. The secondary battery (100) as claimed in claim 9, or as claimed in claims 9 and 11, wherein the positive electrode current collector (150) comprises:
a current collecting body (151) mounted in contact with and electrically connected to the electrode assembly (120);
an inner body (153) in a spacing hole (154) in a center of the current collecting body (151) and fixed to the rivet terminal (144); and
a bridge (152) interconnecting the current collecting body (151) and the inner body (153).

13. The secondary battery (100) as claimed in claim 10, wherein the distance-maintaining member (188, 189) comprises a hemispherical or rectangular parallelepiped protrusion protruding from the current collecting body (151) toward the inner insulating part (174).

14. The secondary battery (100) as claimed in claim 12 or 13, wherein the distance-maintaining member (188, 189) is provided in a plurality, and
wherein the plurality of distance-maintaining members (188, 189) are mounted radially about the inner body (153).

15. The secondary battery (100) as claimed in at least one of claims 8, 11 or 14, wherein the plurality of distance-maintaining members (188, 189) are symmetrically arranged.
